# EUROPÄISCHE PATENTANMELDUNG

(11) **EP 4 656 540 A1**
(43) Veröffentlichungstag der Anmeldung: **03.12.2025**
(21) Anmeldenummer: 25164765.7
(22) Anmeldetag: 19.03.2025
(51) Int. Cl.: B65B 59/04, F16P 1/02, E06B 3/48, E05D 15/00, B65B 57/00, E05D 13/00, B65B 65/02

(54) **SEITENVERKLEIDUNG FÜR VERPACKUNGSMASCHINE**

(30) Priorität: 29.05.2024 DE 102024115018
(71) Anmelder: MULTIVAC Sepp Haggenmüller SE & Co. KG, 87787 Wolfertschwenden (DE)
(72) Erfinder: MUMMENHOFF, Andreas, 87463 Dietmannsried (DE); SCHNEIDER, Anna Lena, 87496 Dietmannsried (DE); BENISCHKE, Herbert, 87700 Memmingen (DE); BRIECHLE, Simon, 87477 Sulzberg (DE)
(74) Vertreter: Grünecker Patent- und Rechtsanwälte PartG mbB

(57) **Zusammenfassung**

Eine Verpackungsmaschine (1), insbesondere in Form einer Tiefziehverpackungsmaschine (2), einer Kammerbandmaschine oder eines Traysealers (16), umfasst ein Maschinengestell (25), wenigstens eine erste Seitenverkleidung (26) und wenigstens eine zweite Seitenverkleidung (27). Die erste Seitenverkleidung (26) ist am Maschinengestell (25) als erster Eingriffsschutz montiert. Die zweite Seitenverkleidung (27) ist an der ersten Seitenverkleidung (26) als zweiter Eingriffsschutz montiert. Die erste Seitenverkleidung (26) ist zwischen einer Schutzposition und einer Zugangsposition verstellbar. Es ist ein Getriebemechanismus (33) vorgesehen, der dazu konfiguriert ist, dass durch das Verstellen der ersten Seitenverkleidung (26) die zweite Seitenverkleidung (27) zwischen einer ausgefahrenen Position und einer eingefahrenen Position verstellbar ist.

## Beschreibung

Die vorliegende Erfindung bezieht sich auf eine Verpackungsmaschine sowie ein Verfahren zum Verstellen einer Seitenverkleidungseinheit an einer Verpackungsmaschine.

### Stand der Technik

Aus dem Stand der Technik sind Verpackungsmaschinen mit Seitenverkleidungen bekannt. Zum Beispiel offenbart EP 2 942 299 A1 eine temperierbare Seitenverkleidung, die am Maschinengestell einer Tiefziehverpackungsmaschine befestigt ist und die sich vor allem entlang einer Einlegestrecke der Tiefziehverpackungsmaschine erstreckt. Gleichzeitig dient diese Seitenverkleidung als Eingriffsschutz. Da die Seitenverkleidung allerdings nicht ganz bis zum Boden reicht, besteht das Risiko, dass die Seitenverkleidung in Bodennähe untergriffen wird, sprich ein Bediener in einen Arbeitsbereich bewegter Werkzeuge hineingreifen kann.

Ferner zeigt die eingereichte, aber noch nicht veröffentlichte Patentanmeldung mit dem amtlichen Aktenzeichen DE 10 2023 110 557.4 eine Verpackungsmaschine mit einer zweiteiligen Seitenverkleidung, insbesondere einer oberen Seitenverkleidung und einer unteren Seitenverkleidung. Die obere und untere Seitenverkleidung sind jeweils am Maschinengestell der Verpackungsmaschine als oberer und unterer Eingriffsschutz montiert. Nach dem Stand der Technik kann zunächst die untere Seitenverkleidung am Maschinengestell montiert werden. Danach kann die obere Seitenverkleidung am Maschinengestell eingehängt und an der vorab montierten unteren Seitenverkleidung befestigt werden.

Der Nachteil dieser Anwendungen besteht darin, dass die (zweiteilige) Seitenverkleidung zum Beispiel zu Wartungs- oder Reinigungszwecken von der Verpackungsmaschine vollständig demontiert werden muss. Dies ist eine äußerst zeit- und arbeitsintensive Maßnahme, durch die Stillstandszeiten der Verpackungsmaschine erhöht werden. Unter Umständen ist auch spezielles Werkzeug für die Demontage und Handhabung der Seitenverkleidung erforderlich. Außerdem muss Platz für die demontierte Seitenverkleidung bereitgestellt werden. Dadurch können sich Wartungskosten erhöhen.

### Aufgabe

Aufgabe der Erfindung ist es, eine Verpackungsmaschine zur Verfügung zu stellen, anhand welcher sich die vorangehend in Zusammenhang mit dem zitierten Stand der Technik beschriebenen Nachteile durch eine vorteilhafte Bauweise beheben lassen. Ferner ist es die Aufgabe der Erfindung, ein dementsprechendes Verfahren zum Verstellen einer Seitenverkleidungseinheit an einer Verpackungsmaschine zur Verfügung zu stellen.

### Lösung

Diese Aufgabe wird erfindungsgemäß durch eine Verpackungsmaschine gemäß dem Anspruch 1 und/oder ein Verfahren zum Verstellen einer Seitenverkleidungseinheit an einer Verpackungsmaschine gemäß dem Anspruch 12 gelöst.

Vorteilhafte Weiterbildungen der Erfindung sind in den Unteransprüchen erfasst.

Ein Aspekt der Erfindung betrifft eine Verpackungsmaschine, insbesondere in Form einer Tiefziehverpackungsmaschine, einer Kammerbandmaschine oder eines Traysealers, umfassend ein Maschinengestell, wenigstens eine erste Seitenverkleidung und wenigstens eine zweite Seitenverkleidung, wobei die erste Seitenverkleidung am Maschinengestell als erster Eingriffsschutz montiert ist, wobei die zweite Seitenverkleidung an der ersten Seitenverkleidung als zweiter Eingriffsschutz montiert ist, wobei die erste Seitenverkleidung zwischen einer Schutzposition und einer Zugangsposition verstellbar ist, und wobei ein Getriebemechanismus vorgesehen ist, der dazu konfiguriert ist, dass durch das Verstellen der ersten Seitenverkleidung die zweite Seitenverkleidung zwischen einer ausgefahrenen Position und einer eingefahrenen Position verstellbar ist. Dies ermöglicht eine einfache Montage und Demontage eines Eingriffsschutzes an der Verpackungsmaschine. Der Getriebemechanismus kann eine Montage und Verstellung der zweiten Seitenverkleidung vereinfachen. Es kann ermöglicht werden, dass beim Verstellen der ersten Seitenverkleidung zwischen der Schutzposition und der Zugangsposition auch die zweite Seitenverkleidung zwischen der ausgefahrenen Position und der eingefahrenen Position automatisch verstellt wird. Dadurch kann ein zusätzlicher Arbeitsschritt zum Verstellen der zweiten Seitenverkleidung entfallen. Indem die zweite Seitenverkleidung gemeinsam mit der ersten Seitenverkleidung verstellbar ist, kann ein Zugang zur Verpackungsmaschine besonders einfach und schnell ermöglicht werden. Dies kann zum Beispiel für Reinings- oder Wartungszwecke an der Verpackungsmaschine vorteilhaft sein. Des Weiteren ist es von Vorteil, dass die Seitenverkleidung insgesamt trotz des einstellbaren Zugangs zur Verpackungsmaschine, am Maschinengestell angebaut bleiben kann, sprich nicht auf dem Hallenboden abgestellt werden braucht.

Die erste und/oder zweite Seitenverkleidung kann zumindest bereichsweise als Lochblech ausgebildet sein. Dadurch kann ein Wärmestau innerhalb des Maschinengestells verhindert werden.

Die Verpackungsmaschine kann zum Beispiel eine Tiefziehverpackungsmaschine, eine Kammerbandmaschine oder ein Traysealer sein. Im Prinzip kann die erste und zweite Seitenverkleidung auch an einer anderen Maschine angebracht werden, beispielsweise an einer Teigverarbeitungsmaschine oder zumindest bereichsweise entlang einer Lebensmittelproduktionslinie.

Die Verpackungsmaschine kann über eine Steuerung verfügen. Diese kann die in der Verpackungsmaschine ablaufenden Prozesse steuern und überwachen.

Die Verpackungsmaschine kann eine oder mehrere Arbeitsstationen aufweisen, insbesondere eine Formstation zum Formen, insbesondere Tiefziehen, von Verpackungsmulden in eine Folie, eine Befüllstation zum Befüllen der Verpackungsmulden mit Produkten, eine Siegelstation zum Versiegeln der Verpackungsmulden mit einer Oberfolie und eine Schneidstation zum Vereinzeln der Verpackungsmulden. Die Arbeitsstationen können zum Beispiel in der genannten Reihenfolge hintereinander entlang einer Produktionsrichtung der Verpackungsmaschine angeordnet sein.

Die zweite Seitenverkleidung kann räumlich unterhalb der ersten Seitenverkleidung am Maschinengestell angeordnet sein. Die erste Seitenverkleidung und die zweite Seitenverkleidung können in Produktionsrichtung entlang der Arbeitsstation oder vor/hinter/zwischen Arbeitsstationen an der Verpackungsmaschine montiert sein. Im Prinzip können die zweite Seitenverkleidung und die erste Seitenverkleidung an jeder geeigneten Stelle an der Verpackungsmaschine bzw. dem Maschinengestell montiert sein, um zumindest bereichsweise entlang der Verpackungsmaschine einen Eingriffsschutz auszubilden. Die zweite Seitenverkleidung kann, insbesondere in der ausgefahrenen Position, bis zum Boden reichen. Dadurch kann ein bis zum Boden reichender Eingriffsschutz gebildet werden. Dies kann, insbesondere bei laufendem Betrieb der Verpackungsmaschine, den Schutz eines Bedieners erhöhen. Es kann verhindert werden, dass ein Bediener in einen hinter der zweiten Seitenverkleidung befindlichen Raum, sprich in einen Arbeitsbereich bewegter Werkzeuge, hineingreifen kann.

Vorzugsweise liegt die erste Seitenverkleidung als eine obere Seitenverkleidung und die zweite Seitenverkleidung als eine untere Seitenverkleidung vor oder die erste Seitenverkleidung liegt als eine untere Seitenverkleidung und die zweite Seitenverkleidung als eine obere Seitenverkleidung vor. Die erste Seitenverkleidung kann somit einen oberen Eingriffsschutz und die zweite Seitenverkleidung kann einen unteren Eingriffsschutz am Maschinengestell bilden - oder umgekehrt. Dadurch kann ein vollständiger Eingriffsschutz am Maschinengestell gebildet werden. Wird die obere Seitenverkleidung verstellt, kann der Getriebemechanismus die Verstellung der oberen Seitenverkleidung auf die untere Seitenverkleidung übertragen. Wird die untere Seitenverkleidung verstellt, kann der Getriebemechanismus die Verstellung der unteren Seitenverkleidung auf obere Seitenverkleidung übertragen. Dadurch kann ein Zugang zur Verpackungsmaschine verbessert werden. Es kann eine Handhabung der Seitenverkleidung insgesamt verbessert werden. Die Verstellbarkeit der Seitenverkleidung insgesamt kann zum Beispiel von der Verpackungsmaschine abhängig sein.

Vorzugsweise umfasst der Getriebemechanismus ein erstes Getriebeelement, insbesondere eine erste Verzahnung, an der ersten Seitenverkleidung und ein zweites Getriebeelement, insbesondere eine zweite Verzahnung, an der zweiten Seitenverkleidung, das mit dem ersten Getriebeelement ineinandergreift. Dadurch kann die zweite Seitenverkleidung einfach in Abhängigkeit von der ersten Seitenverkleidung verstellt werden. Das heißt, eine Verstellung der ersten Seitenverkleidung kann automatisch eine Verstellung der zweiten Seitenverkleidung bewirken. Grundsätzlich kann jede Art eines Getriebemechanismus, zum Beispiel Verzahnungen, vorgesehen sein, der geeignet ist, die zweite Seitenverkleidung in Reaktion auf die Verstellung der ersten Seitenverkleidung zu verstellen. Die erste Verzahnung und/oder die zweite Verzahnung kann länglich oder gebogen/gekrümmt sein.

Eine Variante sieht vor, dass der Getriebemechanismus mindestens ein Kniehebelgelenk aufweist. Damit wäre es möglich, das Verstellen der ersten und/oder zweiten Seitenverkleidung mit einer gewünschten Kraftübersetzung zu tätigen, insbesondere um die erste und/oder die zweite Seitenverkleidung mit einer gewünschten Haltekraft am Maschinengestell zu sichern, insbesondere selbst dann, wenn eine Verriegelungsvorrichtung der Seitenverkleidung gelöst ist.

Vorzugsweise ist die zweite Seitenverkleidung, insbesondere ein oberer Abschlussbereich davon, an einem unteren Endbereich der ersten Seitenverkleidung montiert. Dadurch kann die zweite Seitenverkleidung räumlich unterhalb der ersten Seitenverkleidung an der Verpackungsmaschine angeordnet sein. Die erste Seitenverkleidung kann einen oberen Endbereich und einen, insbesondere gegenüberliegenden, unteren Endbereich aufweisen. Die zweite Seitenverkleidung kann einen oberen Abschlussbereich und einen, insbesondere gegenüberliegenden, unteren Abschlussbereich aufweisen. Die zweite Seitenverkleidung kann dadurch einen zweiten Eingriffsschutz und die erste Seitenverkleidung kann einen ersten Eingriffsschutz ausbilden. Zum Beispiel kann das erste Getriebeelement am unteren Endbereich der ersten Seitenverkleidung angeordnet sein. Das zweite Getriebeelement kann am oberen Abschlussbereich der zweiten Seitenverkleidung angeordnet sein.

Vorzugsweise erstrecken sich die erste Seitenverkleidung in der Schutzposition und die zweite Seitenverkleidung in der ausgefahrenen Position im Wesentlichen parallel zum Maschinengestell, insbesondere in derselben Ausrichtung. Dadurch kann besonders einfach ein vollständiger Eingriffsschutz am Maschinengestell gebildet werden. Die erste Seitenverkleidung, insbesondere deren erste Verkleidungsfläche, in der Schutzposition und die zweite Seitenverkleidung, insbesondere deren zweite Verkleidungsfläche, in der ausgefahrenen Position können sich, im Wesentlichen, orthogonal zum Boden, insbesondere in derselben Ausrichtung, erstrecken. Die Ausrichtung kann, im Wesentlichen, parallel zum Maschinengestell sein. Der Begriff "in derselben Ausrichtung erstrecken" kann bedeuten, dass die erste Seitenverkleidung und die zweite Seitenverkleidung nicht in einem Winkel zueinander angeordnet sind. Die erste Seitenverkleidung kann räumlich oberhalb der zweiten Seitenverkleidung in derselben Ausrichtung am Maschinengestell angebracht sein.

Vorzugsweise sind die erste Seitenverkleidung in der Zugangsposition und die zweite Seitenverkleidung in der eingefahrenen Position, insbesondere in derselben Richtung, vom Maschinengestell weggeschwenkt. Dadurch kann eine Zugänglichkeit zur Verpackungsmaschine, insbesondere dem Maschinengestell und einem dahinterliegenden Bereich, ermöglicht werden. Wenn die erste Seitenverkleidung geschwenkt wird oder ist, kann die zweite Seitenverkleidung in demselben Maß, stärker oder schwächer weggeschwenkt werden oder sein. Der Begriff "in derselben Richtung vom Maschinengestell wegschwenken" kann bedeuten, dass bezogen auf das Maschinengestell die erste Seitenverkleidung und ebenso die zweite Seitenverkleidung in derselben Richtung schwenkbar sind. Die erste Seitenverkleidung kann zwischen der Zugangsposition und der Schutzposition um wenigstens 25 Grad, vorzugsweise wenigstens 45 Grad, geschwenkt werden. Die erste Seitenverkleidung kann zwischen der Zugangsposition und der Schutzposition um höchstens 90 Grad, vorzugsweise höchstens 75 Grad, vorzugsweise höchstens 50 Grad, geschwenkt werden. Die zweite Seitenverkleidung kann zwischen der ausgefahrenen Position und der eingefahrenen Position um wenigstens 25 Grad, vorzugsweise wenigstens 45 Grad, geschwenkt werden. Die zweite Seitenverkleidung kann zwischen der ausgefahrenen Position und der eingefahrenen Position um höchstens 90 Grad, vorzugsweise höchstens 75 Grad, geschwenkt werden. Die erste Seitenverkleidung und die zweite Seitenverkleidung können, insbesondere in einer Seitenansicht, der Verpackungsmaschine, gegensinnig vom Maschinengestell wegschwenkbar sein. Das heißt, wenn die erste Seitenverkleidung nach links, das heißt gegen den Uhrzeigersinn, vom Maschinengestell weggeschwenkt wird, kann die zweite Seitenverkleidung nach rechts, das heißt im Uhrzeigersinn, vom Maschinengestell weggeschwenkt werden - und umgekehrt.

Vorzugsweise erstreckt sich die zweite Seitenverkleidung in der eingefahrenen Position entlang einer Innenfläche oder Außenfläche der ersten Seitenverkleidung, insbesondere, wenn sich die erste Seitenverkleidung in der Zugangsposition befindet. Dadurch kann eine Zugänglichkeit zur Verpackungsmaschine, insbesondere dem Maschinengestell und einem dahinterliegenden Bereich, ermöglicht werden. Zum Beispiel kann das erste Getriebeelement an der ersten Seitenverkleidung und das zweite Getriebeelement an der zweiten Seitenverkleidung jeweils länglich sein. Das erste Getriebeelement kann eine Führungsschiene und das zweite Getriebeelement kann ein Führungsschlitten sein, der in der Führungsschiene bewegbar ist - oder umgekehrt.

Vorzugsweise ist die zweite Seitenverkleidung in der eingefahrenen Position eingezogen oder schneckenförmig eingerollt, insbesondere, wenn sich die erste Seitenverkleidung in der Zugangsposition befindet. Dadurch kann eine Zugänglichkeit zur Verpackungsmaschine, insbesondere dem Maschinengestell und einem dahinterliegenden Bereich, ermöglicht werden. Zum Beispiel kann der Getriebemechanismus ein Aufrollmechanismus sein, um die zweite Seitenverkleidung aufzurollen. Die zweite Seitenverkleidung kann insbesondere biegsam und/oder faltbar sein. Dies kann ein Aufrollen der zweiten Seitenverkleidung erleichtern.

Vorzugsweise umfasst die Verpackungsmaschine ein Fixierelement, insbesondere einen Hebel, zum Blockieren und/oder Freigeben der Verstellbarkeit der zweiten Seitenverkleidung und der ersten Seitenverkleidung relativ zueinander. Dadurch kann eine Stellung der ersten Seitenverkleidung und der zweiten Seitenverkleidung relativ zueinander fixiert oder gelöst werden. Das Fixierelement kann zwischen einer Blockadestellung und einer Freigabestellung verstellbar sein. Wenn das Fixierelement in der Freigabestellung ist, kann ermöglicht werden, dass die erste Seitenverkleidung zwischen der Schutzposition und der Zugangsposition verstellt wird und dass die zweite Seitenverkleidung zwischen der ausgefahrenen Position und der eingefahrenen Position verstellt wird. Wenn das Fixierelement in der Blockadestellung ist, kann verhindert werden, dass die erste Seitenverkleidung zwischen der Schutzposition und der Zugangsposition verstellt wird und dass die zweite Seitenverkleidung zwischen der ausgefahrenen Position und der eingefahrenen Position verstellt wird. Insbesondere kann das Fixierelement in der Blockadestellung eine Stellung der ersten Seitenverkleidung in der Zugangsposition und eine Stellung der zweiten Seitenverkleidung in der eingefahrenen Position fixieren. Grundsätzlich kann jede Art eines Fixierelements vorgesehen sein, das geeignet ist, eine Verstellbarkeit der ersten Seitenverkleidung und der zweiten Seitenverkleidung relativ zueinander zu blockieren oder freizugeben. Zum Beispiel kann das Fixierelement ein, insbesondere manuell verstellbarer, Hebel sein. Der Hebel kann an der ersten Seitenverkleidung montiert und, insbesondere zum Blockieren, mit der zweiten Seitenverkleidung, insbesondere einem daran angebrachten Gegenhalt, in Eingriff bringbar sein - oder umgekehrt. Der Hebel kann starr oder flexibel sein. Zum Beispiel kann der Hebel, zumindest bereichsweise, ein (Teleskop)Stab, ein, insbesondere elastisches, Seil oder eine (Schrauben)Feder sein. Der Hebel kann bzgl. der ersten Seitenverkleidung oder der zweiten Seitenverkleidung schwenkbar oder ausziehbar sein. Der Hebel kann in die erste Seitenverkleidung oder die zweite Seitenverkleidung einsteckbar oder daran einhängbar sein.

Vorzugsweise umfasst die Verpackungsmaschine eine Halterung zum Montieren der ersten Seitenverkleidung am Maschinengestell, wobei die Halterung am Maschinengestell, insbesondere lösbar, montiert und mit der ersten Seitenverkleidung derart verbunden ist, dass die erste Seitenverkleidung relativ zum Maschinengestell verstellbar, insbesondere schwenkbar, ist. Dadurch kann die erste Seitenverkleidung einfach und sicher am Maschinengestell montiert und demontiert werden. Die Halterung kann an einem zweiten Längsträger des Maschinengestells montierbar sein. Die Halterung kann einen Haken aufweisen. Der Haken kann am Maschinengestell eingehängt oder eingesteckt werden. Die Halterung kann ein Verbindungselement aufweisen. Der Haken und das Verbindungselement können starr oder bewegbar miteinander verbunden sein. Das Verbindungselement kann den Haken und die erste Seitenverkleidung miteinander verbinden. Das Verbindungselement kann an der ersten Seitenverkleidung montiert sein, insbesondere derart, dass die erste Seitenverkleidung gegenüber dem Verbindungselement verstellbar ist. Zum Beispiel können das Verbindungselement und die erste Seitenverkleidung über eine Stift-Nut-Verbindung schwenkbar miteinander verbunden sein. Die Nut kann in das Verbindungselement eingefügt sein. Der Stift kann an der ersten Seitenverkleidung derart befestigt sein, dass der Stift in der Nut verschiebbar ist. Die Nut kann bogenförmig sein. Ein Maß der Verstellbarkeit der ersten Seitenverkleidung bezüglich des Maschinengestells kann von der Nut, insbesondere deren Form und/oder Abmessung, abhängig sein. Je länger die Nut ist, desto größer kann die Verstellbarkeit der ersten Seitenverkleidung bezüglich des Maschinengestells sein. Optional kann an der Halterung das Fixierelement verstellbar befestigt sein. Zum Beispiel kann das Fixierelement an einer Stiftverbindung zwischen dem Haken und dem Verbindungselement verstellbar befestigt sein.

Vorzugsweise ist die zweite Seitenverkleidung an der Halterung oder der ersten Seitenverkleidung montiert. Dadurch kann eine sichere Verbindung zwischen der zweiten Seitenverkleidung und der ersten Seitenverkleidung ermöglicht werden. Die zweite Seitenverkleidung kann gemeinsam mit der ersten Seitenverkleidung gehandhabt, insbesondere montiert und demontiert werden. Wenn die erste Seitenverkleidung abgenommen wird, kann zugleich die zweite Seitenverkleidung ohne einen separaten Arbeitsschritt mit abgenommen werden. Dies kann ebenso für die Montage gelten. Dadurch können die Montage und Demontage der zweiten Seitenverkleidung besonders einfach und schnell durchgeführt werden. Die zweite Seitenverkleidung kann zum Beispiel über eine Bolzen-Verbindung an der ersten Seitenverkleidung oder der Halterung, insbesondere dem Verbindungselement, montiert sein. Dadurch kann die zweite Seitenverkleidung bzgl. der ersten Seitenverkleidung verstellt, insbesondere geschwenkt oder eingerollt, werden. Optional kann die zweite Seitenverkleidung bzgl. der ersten Seitenverkleidung über die Führungsschiene und den Führungsschlitten ein- und ausfahrbar befestigt sein.

Vorzugsweise umfasst die Verpackungsmaschine eine erste Verriegelungsvorrichtung an der ersten Seitenverkleidung, insbesondere an einem oberen Abschlussbereich davon, zum lösbaren Montieren der ersten Seitenverkleidung am Maschinengestell. Dadurch kann die erste Seitenverkleidung, insbesondere in der Schutzposition, einfach und sicher am Maschinengestell, insbesondere einem ersten Längsträger davon, verriegelt werden. Es kann verhindert werden, dass die erste Seitenverkleidung sich ungewollt vom Maschinengestell lösen kann. Grundsätzlich kann jede Art einer ersten Verriegelungsvorrichtung vorgesehen sein, die geeignet ist, die erste Seitenverkleidung am Maschinengestell zu verriegeln. Die erste Verriegelungsvorrichtung kann am Maschinengestell eingehängt oder eingesteckt werden. Die erste Verriegelungsvorrichtung kann starr oder flexibel sein. Zum Beispiel kann die erste Verriegelungsvorrichtung, zumindest bereichsweise, ein (Teleskop)Stab, ein, insbesondere elastisches, Seil oder eine (Schrauben)Feder sein. Die erste Verriegelungsvorrichtung kann schwenkbar oder ausziehbar sei. Die erste Verriegelungsvorrichtung kann in das Maschinengestell einsteckbar oder daran einhängbar sein.

Ein weiterer Aspekt der Erfindung betrifft ein Verfahren zum Verstellen einer Seitenverkleidungseinheit an einer Verpackungsmaschine, insbesondere Tiefziehverpackungsmaschine, Kammerbandmaschine oder Traysealer, wobei die Verpackungsmaschine ein Maschinengestell umfasst, wobei die Seitenverkleidungseinheit eine erste Seitenverkleidung und eine zweite Seitenverkleidung umfasst, wobei die erste Seitenverkleidung zwischen einer Zugangsposition und einer Schutzposition verstellt wird, und wobei die zweite Seitenverkleidung beim Verstellen der ersten Seitenverkleidung durch einen Getriebemechanismus zwischen einer eingefahrenen Position und einer ausgefahrene Position verstellt wird.

Vorzugsweise umfasst das Verfahren den Schritt des Montierens einer Halterung der ersten Seitenverkleidung am Maschinengestell oder des Lösens der Halterung der ersten Seitenverkleidung vom Maschinengestell.

Vorzugsweise umfasst das Verfahren den Schritt des Verriegelns einer ersten Verriegelungsvorrichtung der ersten Seitenverkleidung am Maschinengestell oder des Lösens der ersten Verriegelungsvorrichtung der ersten Seitenverkleidung vom Maschinengestell.

Vorzugsweise umfasst das Verfahren den Schritt des Fixierens eines Fixierelements zum Fixieren der ersten Seitenverkleidung in der Zugangsposition und der zweiten Seitenverkleidung in der eingefahrenen Position oder des Lösens des Fixierelements.

Die von einem der Aspekte (Verpackungsmaschine oder Verfahren) beschriebenen Merkmale oder Erläuterungen können einzeln oder in Kombination auf die anderen Aspekte übertragen und mit diesen kombiniert werden.

Im Folgenden wird die Erfindung anhand von beispielhaften Ausführungsformen erläutert. Es zeigen:
- Figur 1: eine Seitenansicht einer Verpackungsmaschine, die in Form einer Tiefziehverpackungsmaschine vorliegt,
- Figur 2: eine Seitenansicht einer Verpackungsmaschine, die in Form eines Traysealers vorliegt,
- Figur 3: eine Seitenansicht eines Ausschnitts der Verpackungsmaschine mit einer ersten Seitenverkleidung und einer zweiten Seitenverkleidung in einem montierten Zustand,
- Figur 4: eine Seitenansicht eines Ausschnitts der Verpackungsmaschine mit einer ersten Seitenverkleidung und einer zweiten Seitenverkleidung in einem teilmontierten Zustand,
- Figur 5: eine Seitenansicht eines Ausschnitts der Verpackungsmaschine mit einer ersten Seitenverkleidung und einer zweiten Seitenverkleidung in einem demontierten Zustand,
- Figur 6: eine vergrößerte Seitenansicht der ersten Seitenverkleidung und der zweiten Seitenverkleidung, und
- Figur 7: eine vergrößerte Seitenansicht der ersten Seitenverkleidung und der zweiten Seitenverkleidung aus einer zu Figur 6 entgegengesetzten Blickrichtung.

Gleiche technische Merkmale sind in den Figuren durchgehend mit den gleichen Bezugszeichen versehen.

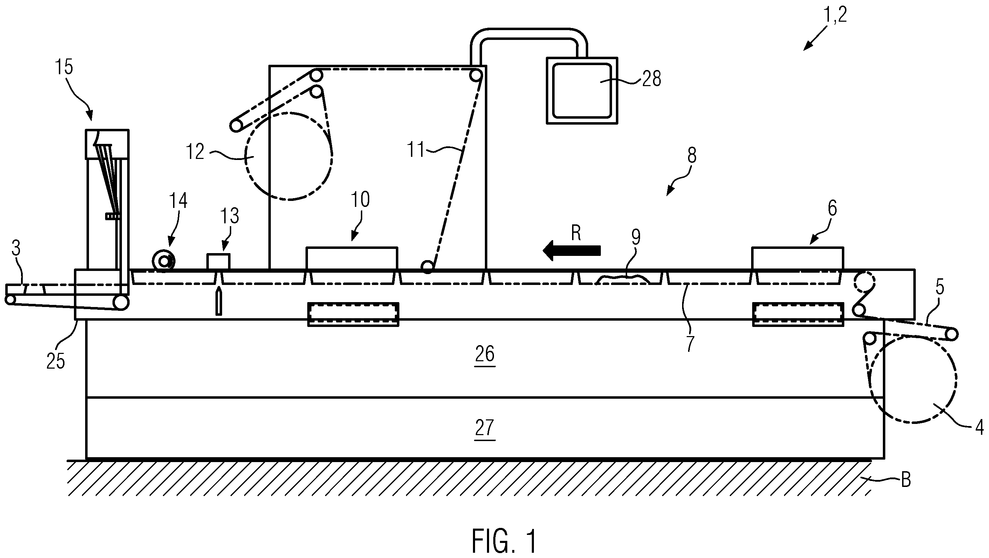

Figur 1 zeigt eine Verpackungsmaschine 1, die in Form einer Tiefziehverpackungsmaschine 2 vorliegt. Die Tiefziehverpackungsmaschine 2 ist dazu konfiguriert, Verpackungen 3 herzustellen. Die Tiefziehverpackungsmaschine 2 umfasst eine Abwicklung 4 für eine Unterfolie 5. In Produktionsrichtung R stromabwärts der Abwicklung 4 ist eine Formstation 6 positioniert, die in die Unterfolie 5 durch Tiefziehen, beispielsweise mittels Druckluft und/oder Vakuum, Verpackungsmulden 7 formt. Stromabwärts der Formstation 6 ist eine Einlegestrecke 8 an der Tiefziehverpackungsmaschine 2 ausgebildet, an welcher Produkte 9 in die Verpackungsmulden 7 eingelegt werden. Stromabwärts in Produktionsrichtung R folgt eine Siegelstation 10, mittels welcher sich die mit Produkt 9 beladene Verpackungsmulden 7 mit einer Oberfolie 11 verschließen lassen. Die Oberfolie 11 wird von einer Oberfolienabwicklung 12 in die Siegelstation 10 geführt. Nach Verlassen der Siegelstation 10 werden die versiegelten Verpackungsmulden 7 zunächst einer Querschneideeinrichtung 13 und anschließend einer Längsschneideeinrichtung 14 zugeführt, um vereinzelte Verpackungen 3 herzustellen. Hinter der Längsschneideeinrichtung 14 übrig gebliebene Restfolienstreifen werden von einer am Ausgang der Tiefziehverpackungsmaschine 2 positionierten Restfolienaufnahme 15 aufgenommen.

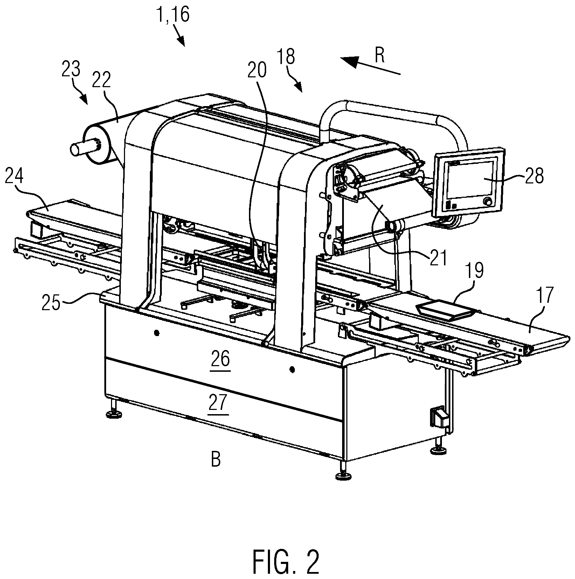

Figur 2 zeigt eine schematische Seitenansicht einer Verpackungsmaschine 1 in Form eines Traysealers 16. Der Traysealer 16 umfasst ein Zuführband 17. Stromabwärts in Produktionsrichtung R folgt eine Siegelstation 18. Durch das Zuführband 17 werden leere Verpackungsschalen 19 zur Siegelstation 18 befördert. Die Verpackungsschalen 19 werden mit einer Greifereinrichtung 20 in die Siegelstation 18 umgesetzt und dort mit einer Deckelfolie 21 verschlossen, beispielsweise durch Ansiegeln der Deckfolie 21. Vor oder während des Ansiegelns der Deckelfolie 21 werden den Verpackungen bzw. Verpackungsverbünden entsprechende Bereiche der Deckfolie 21 in der Siegelstation 18 aus der Bahn der Deckfolie 21 ausgeschnitten. Es verbleibt ein Folienrestgitter 22 der Deckfolie 21, welches mit einer Vorrichtung 23 zum Aufwickeln des Folienrestgitters 22 aufgewickelt wird. Die derart fertiggestellten Verpackungen werden über die Greifereinrichtung 20 aus der Siegelstation 18 auf ein Abführband 24 umgesetzt.

Ferner weisen die Tiefziehverpackungsmaschine 2 und der Traysealer 16 jeweils eine Steuerung 28 auf, die die in der Tiefziehverpackungsmaschine 2 bzw. dem Traysealer 16 ablaufenden Prozesse steuert und überwacht.

Des Weiteren zeigen die Figuren 1 und 2, dass die Tiefziehverpackungsmaschine 2 und der Traysealer 16 jeweils mit einer Seitenverkleidungseinheit 50 ausgestattet sind. Die Seitenverkleidungseinheit 50 umfasst eine erste Seitenverkleidung 26 und eine zweite Seitenverkleidung 27. Die erste Seitenverkleidung 26 und die zweite Seitenverkleidung 27 sind in der Produktionsrichtung R an einem Maschinengestell 25 der Verpackungsmaschine 1 montiert, um daran einen Eingriffsschutz auszubilden. Die erste Seitenverkleidung 26 ist räumlich oberhalb der zweiten Seitenverkleidung 27 angeordnet. Die zweite Seitenverkleidung 27 reicht bis zu einem Boden B, auf dem die Verpackungsmaschine 1 angeordnet ist. Dadurch wird verhindert, dass ein Bediener (nicht dargestellt) in einen hinter der zweiten Seitenverkleidung 27 befindlichen Raum, sprich in einen Arbeitsbereich bewegter Werkzeuge, hineingreifen kann. Gemäß den Figuren 1 und 2 ist im Wesentlichen die komplette sichtbare Seite der Verpackungsmaschine 1 mittels der beiden Seitenverkleidungen 26, 27 zugebaut, was auf der gegenüberliegenden, nicht sichtbaren Seite sowie der vorderen und hinteren Seite der Verpackungsmaschine 1 genauso der Fall sein kann.

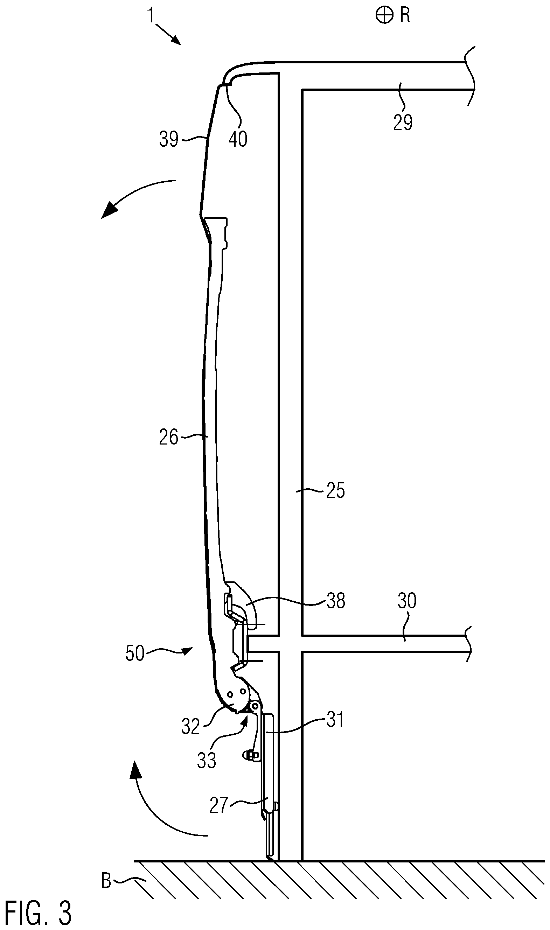

Die Montage und Demontage der ersten Seitenverkleidung 26 und der zweiten Seitenverkleidung 27 am Maschinengestell 25 ist in den Figuren 3 bis 7 im Detail gezeigt.

Figur 3 zeigt eine Seitenansicht eines Ausschnitts der Verpackungsmaschine 1 mit der ersten Seitenverkleidung 26 und der zweiten Seitenverkleidung 27 in einem montierten Zustand. Das Maschinengestell 25 weist einen ersten Längsträger 29 und einen zweiten Längsträger 30 auf. Die erste Seitenverkleidung 26 ist am zweiten Längsträger 30 über eine Halterung 38 montiert. Zusätzlich ist die erste Seitenverkleidung 26 am ersten Längsträger 29 fixiert. Die zweite Seitenverkleidung 27 hingegen ist nicht unmittelbar an der Verpackungsmaschine 1 befestigt, sondern über die Halterung 38 an der ersten Seitenverkleidung 26 angebracht. Dadurch ist es möglich die erste Seitenverkleidung 26 und die zweite Seitenverkleidung 27 gemeinsam zu handhaben. Wird die erste Seitenverkleidung 26 am Maschinengestell 25 montiert oder demontiert, wird automatisch auch die zweite Seitenverkleidung 27 mitbewegt. Dadurch wird die Montage und Demontage der zweiten Seitenverkleidung 27 erleichtert und beschleunigt.

Wie aus Figur 3 hervorgeht, ist die erste Seitenverkleidung 26 am zweiten Längsträger 30 über die Halterung 38 eingehängt. Dadurch ist eine besonders einfache Montage und Demontage möglich. Insbesondere wird hierfür kein zusätzliches Werkzeug benötigt.

Zur Fixierung der ersten Seitenverkleidung 26 am ersten Längsträger 29 ist eine Verriegelungsvorrichtung 39 an einem oberen Abschlussbereich 31 der ersten Seitenverkleidung 26 vorgesehen (siehe Figur 3). Die Verriegelungsvorrichtung 39 dient dazu, die am zweiten Längsträger 30 eingehängte erste Seitenverkleidung 26 in einer Schutzposition einfach und sicher am Maschinengestell 25 zu verriegeln. Dadurch wird verhindert, dass die erste Seitenverkleidung 26 sich ungewollt vom Maschinengestell 25 lösen kann. Die Verriegelungsvorrichtung 39 ist im vorliegenden Ausführungsbeispiel eine steife Platte mit einem flexiblen, insbesondere komprimierbaren, Endstück 40, das im montierten Zustand am ersten Längsträger 29 eingeklemmt ist. Dadurch kann die erste Seitenverkleidung 26 besonders einfach und ohne zusätzliches Werkzeug am Maschinengestell 25 fixiert werden. Für die Demontage der ersten Seitenverkleidung 26 wird die Verriegelungsvorrichtung 39 bzw. das Endstück 40 einfach vom Maschinengestell 25 abgezogen.

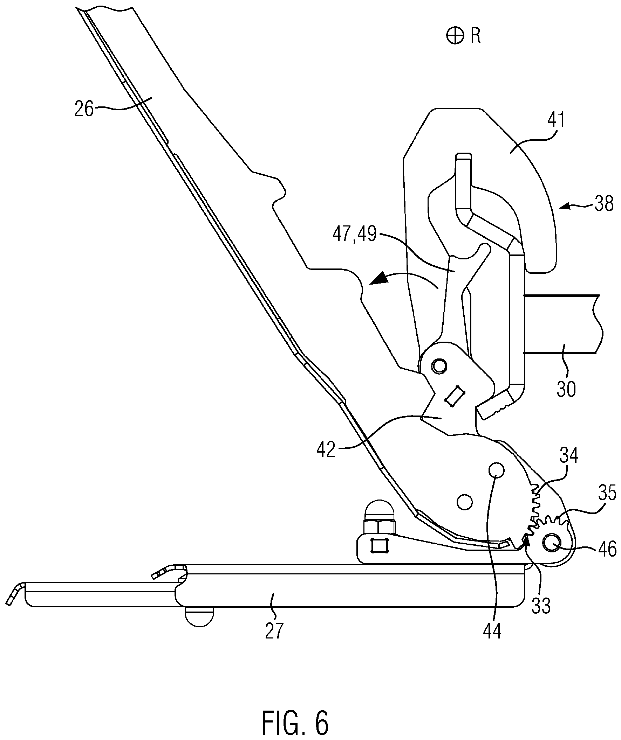

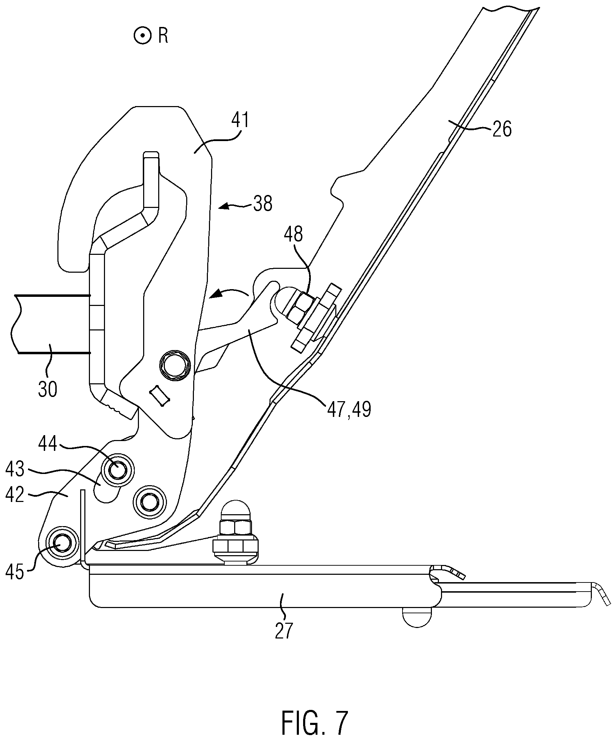

Die Figuren 6 und 7 zeigen im Detail, dass die zweite Seitenverkleidung 27 über die Halterung 38 an der ersten Seitenverkleidung 26 befestigt ist. Die Halterung 38 umfasst einen Haken 41 und ein Verbindungselement 42. Mittels des Hakens 41 kann die erste Seitenverkleidung 26 einfach und sicher am Maschinengestell 25 eingehängt und ausgehängt werden. Der Haken 41 und das Verbindungselement 42 sind starr miteinander verbunden, d.h. es findet keine Relativbewegung zwischen ihnen statt. Das Verbindungselement 42 verbindet den Haken 41 und die erste Seitenverkleidung 26 miteinander. Dazu ist das Verbindungselement 42 über eine Stift-Nut-Verbindung an der ersten Seitenverkleidung 26 befestigt. Das Verbindungselement 42 weist eine bogenförmige Nut 43 und die erste Seitenverkleidung 26 weist einen Stift 44 auf, der in der Nut 43 verschiebbar ist. Durch die Stift-Nut-Verbindung ist die erste Seitenverkleidung 26 gegenüber dem Verbindungselement 42 verstellbar und damit die erste Seitenverkleidung 26 bzgl. des Maschinengestells 25 schwenkbar. Im vorliegenden Ausführungsbeispiel ist die Nut 43 derart dimensioniert, dass die erste Seitenverkleidung 26 um etwa 45 Grad verstellbar ist. Die zweite Seitenverkleidung 27 ist am Verbindungselement 42 über eine Bolzen-Verbindung drehbar befestigt. Dazu ist im Verbindungselement 42 eine Öffnung 45 und an der zweiten Seitenverkleidung 27 ein Bolzen 46 angebracht, der durch die Öffnung 45 geführt ist. Dies erlaubt es der zweiten Seitenverkleidung 27 sich gegenüber der Halterung 38 zu drehen und zwischen einer nachfolgend beschriebenen ausgefahrenen Position und einer eingefahrenen Position verstellt zu werden.

Figur 3 zeigt ferner die Anbringung der zweiten Seitenverkleidung 27 an der ersten Seitenverkleidung 26. Die zweite Seitenverkleidung 27, insbesondere ein oberer Abschlussbereich 31 davon, ist an einem unteren Endbereich 32 der ersten Seitenverkleidung 26 befestigt. Somit sind die erste Seitenverkleidung 26 und die zweite Seitenverkleidung 27 räumlich übereinander bezüglich des Maschinengestells 25 angeordnet. In Figur 3 befindet sich die zweite Seitenverkleidung 27 in der ausgefahrenen Position. Die erste Seitenverkleidung 26 befindet sich in der Schutzposition. Ferner zeigt Figur 3, dass sich die erste Seitenverkleidung 26 in der Schutzposition und die zweite Seitenverkleidung 27 in der ausgefahrenen Position jeweils parallel zum Maschinengestell 25 und orthogonal zum Boden B erstrecken. Die erste Seitenverkleidung 26 in der Schutzposition und die zweite Seitenverkleidung 27 in der ausgefahrenen Position sind somit nicht zueinander verkippt angeordnet. In dieser Position bilden die erste Seitenverkleidung 26 einen ersten Eingriffsschutz am Maschinengestell 25 und die zweite Seitenverkleidung 27 einen zweiten bis zum Boden B reichenden Eingriffsschutz am Maschinengestell 25.

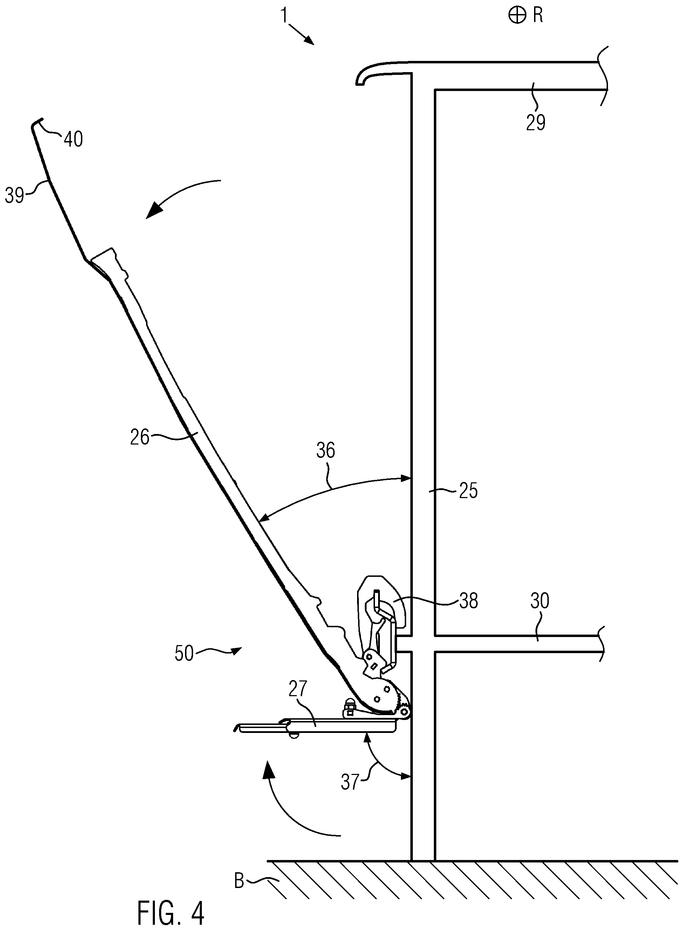

Figur 4 zeigt eine Seitenansicht eines Ausschnitts der Verpackungsmaschine 1 mit der ersten Seitenverkleidung 26 und der zweiten Seitenverkleidung 27 in einem teilmontierten Zustand. Im Gegensatz zum montierten Zustand in Figur 3 sind die erste Seitenverkleidung 26 und die zweite Seitenverkleidung 27 im teilmontierten Zustand vom Maschinengestell 25 entsprechend der Pfeilrichtung weggeschwenkt. Die erste Seitenverkleidung 26 wird, um von der Schutzposition in Figur 3 in eine Zugangsposition in Figur 4 bewegt zu werden, um einen ersten Schwenkwinkel 36 von etwa 45 Grad geschwenkt. Die zweite Seitenverkleidung 27 wird, um von der ausgefahrenen Position in Figur 3 in die eingefahrene Position in Figur 4 bewegt zu werden, um einen zweiten Schwenkwinkel 37 von etwa 90 Grad geschwenkt. Die erste Seitenverkleidung 26 und die zweite Seitenverkleidung 27 werden dabei gegensinnig vom Maschinengestell 25 weggeschwenkt. Im vorliegenden Ausführungsbeispiel wird zur Demontage die erste Seitenverkleidung 26 nach links vom Maschinengestell 25 weggeschwenkt und die zweite Seitenverkleidung 27 wird nach rechts vom Maschinengestell weggeschwenkt. Zur Montage würden die erste Seitenverkleidung 26 und die zweite Seitenverkleidung 27 entsprechend andersherum geschwenkt. Somit werden die erste Seitenverkleidung 26 und die zweite Seitenverkleidung 27 beide bezogen auf das Maschinengestell 25 in derselben Richtung geschwenkt, nämlich jeweils vom Maschinengestell 25 nach außen weg, aber in unterschiedlicher Drehrichtung. In Figur 4 befindet sich erste Seitenverkleidung 26 in der Zugangsposition. Die zweite Seitenverkleidung 27 befindet sich in der eingefahrenen Position. In dieser Position bilden die erste Seitenverkleidung 26 und die zweite Seitenverkleidung 27 keinen Eingriffsschutz, sondern ermöglichen einen Zugang zur Verpackungsmaschine 1.

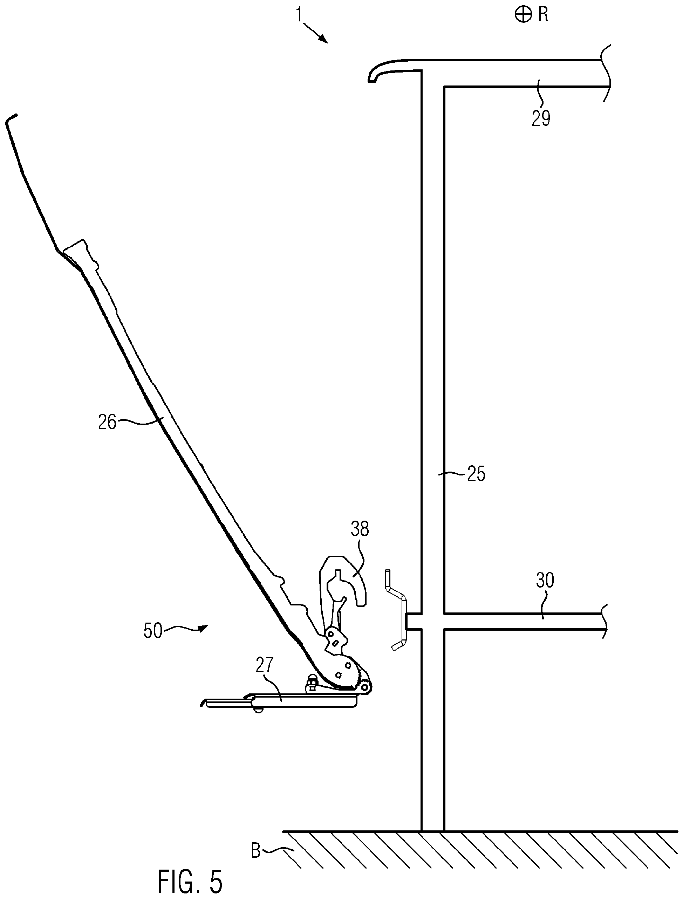

Figur 5 zeigt eine Seitenansicht eines Ausschnitts der Verpackungsmaschine 1 mit der ersten Seitenverkleidung 26 und der zweiten Seitenverkleidung 27 in einem demontierten Zustand. Ein Fixierelement 47 (siehe Figur 6) befindet sich in einer Blockadestellung und fixiert somit die erste Seitenverkleidung 26 in der Zugangsposition und die zweite Seitenverkleidung 27 in der eingefahrenen Position. Zum Abnehmen der Seitenverkleidungseinheit 50 wird die Halterung 38 der ersten Seitenverkleidung 26 einfach vom zweiten Längsträger 30 ausgehängt. Da die zweite Seitenverkleidung 27 an der ersten Seitenverkleidung 26 befestigt ist, wird die zweite Seitenverkleidung 27 gemeinsam mit der ersten Seitenverkleidung 26 vom Maschinengestell 25 abgenommen.

Die Schwenkbewegung der ersten Seitenverkleidung 26 und der zweiten Seitenverkleidung 27 bezüglich des Maschinengestells 25 erfolgt mittels eines Getriebemechanismus 33, über den die erste Seitenverkleidung 26 und die zweite Seitenverkleidung 27 miteinander verbunden sind. Dadurch überträgt sich eine Schwenkbewegung der ersten Seitenverkleidung 26 automatisch auf die zweite Seitenverkleidung 27. Somit ist es möglich, die zweite Seitenverkleidung 27 in Reaktion auf eine Verstellung der ersten Seitenverkleidung 26 ebenfalls zu verstellen ohne dass ein separater Arbeitsschritt hierfür erforderlich ist. Die Verstellung der zweiten Seitenverkleidung 27 wird dadurch besonders vereinfacht. Dies ist zum Beispiel für Reinings- oder Wartungszwecke an der Verpackungsmaschine 1 besonders vorteilhaft.

Die Verstellbarkeit der zweite Seitenverkleidung 27 und der ersten Seitenverkleidung 26 über den Getriebemechanismus 33 ist im Detail in den Figuren 6 und 7 dargestellt. In Figur 6 befinden sich die erste Seitenverkleidung 26 in der Zugangsposition und die zweite Seitenverkleidung 27 in der eingefahrenen Position, es besteht also kein Eingriffsschutz am Maschinengestell 25. Der Getriebemechanismus 33 umfasst ein erstes Getriebeelement 34 in Form einer bogenförmigen ersten Verzahnung und ein zweites Getriebeelement 35 in Form einer bogenförmigen zweiten Verzahnung. Das erste Getriebeelement 34 ist am unteren Endbereich 32 der ersten Seitenverkleidung 26 montiert. Das zweite Getriebeelement 35 ist am oberen Abschlussbereich 31 der zweiten Seitenverkleidung 27 montiert. Das erste Getriebeelement 34 und das zweite Getriebeelement 35 greifen ineinander, um die zweite Seitenverkleidung 27 in Reaktion auf die Verstellung der ersten Seitenverkleidung 26 mechanisch zu verstellen.

Figur 7 zeigt dieselbe Stellung der ersten Seitenverkleidung 26 und der zweiten Seitenverkleidung 27 wie in Figur 6 aber aus der entgegengesetzten Blickrichtung, insbesondere entgegen der Produktionsrichtung R. Wird die erste Seitenverkleidung 26 aus der Zugangsposition in die Schutzposition verstellt, wird diese Bewegung über den Getriebemechanismus 33 auf die zweite Seitenverkleidung 27 übertragen und diese aus der eingefahrenen Position in die ausgefahrene Position geschwenkt. Dabei verschiebt sich auch der Stift 44 in der Nut 43, über den die zweite Seitenverkleidung 27 an der ersten Seitenverkleidung 26 gehalten wird.

Um die erste Seitenverkleidung 26 und die zweite Seitenverkleidung 27 vom Maschinengestell 25 abzunehmen ist es ferner von Vorteil, wenn die erste Seitenverkleidung 26 in der Zugangsposition und die zweite Seitenverkleidung 27 in der eingefahrenen Position fixiert sind, die erste Seitenverkleidung 26 und die zweite Seitenverkleidung 27 also relativ zueinander fixiert sind. Dazu ist, wie in den Figuren 6 und 7 gezeigt, an der Halterung 38 das Fixierelement 47 in Form eines starren Hebels 49 vorgesehen. Das Fixierelement 47 ist an der Halterung 38 drehbar befestigt und kann durch Schwenken entlang der in Figur 6 gezeigten Pfeilrichtung mit einem an der ersten Seitenverkleidung 26 angebrachten Gegenhalt 48 in Eingriff gebracht werden (siehe Figur 7). Bei Kontakt mit dem Gegenhalt 48 befindet sich das Fixierelement 47 in einer Blockadestellung. Wenn das Fixierelement 47 in der Blockadestellung ist, verhindert es, dass die erste Seitenverkleidung 26 zwischen der Schutzposition und der Zugangsposition verstellt wird und dass die zweite Seitenverkleidung 27 zwischen der ausgefahrenen Position und der eingefahrenen Position verstellt wird. Wird das Fixierelement 47 entsprechend der Pfeilrichtung in Figur 7 bewegt, wird es aus der Blockadestellung in eine in Figur 6 gezeigte Freigabestellung verstellt. Wenn das Fixierelement 47 in der Freigabestellung ist, ermöglicht es, dass die erste Seitenverkleidung 26 zwischen der Schutzposition und der Zugangsposition verstellt wird und dass die zweite Seitenverkleidung 27 zwischen der ausgefahrenen Position und der eingefahrenen Position verstellt wird.

## Patentansprüche

1. Verpackungsmaschine (1), insbesondere in Form einer Tiefziehverpackungsmaschine (2), einer Kammerbandmaschine oder eines Traysealers (16), umfassend:
ein Maschinengestell (25),
wenigstens eine erste Seitenverkleidung (26) und
wenigstens eine zweite Seitenverkleidung (27),
wobei die erste Seitenverkleidung (26) am Maschinengestell (25) als erster Eingriffsschutz montiert ist,
wobei die zweite Seitenverkleidung (27) an der ersten Seitenverkleidung (26) als zweiter Eingriffsschutz montiert ist,
wobei die erste Seitenverkleidung (26) zwischen einer Schutzposition und einer Zugangsposition verstellbar ist,
wobei ein Getriebemechanismus (33) vorgesehen ist, der dazu konfiguriert ist, dass durch das Verstellen der ersten Seitenverkleidung (26) die zweite Seitenverkleidung (27) zwischen einer ausgefahrenen Position und einer eingefahrenen Position verstellbar ist.

2. Verpackungsmaschine nach Anspruch 1, wobei die erste Seitenverkleidung (26) als eine obere Seitenverkleidung und die zweite Seitenverkleidung (27) als eine untere Seitenverkleidung vorliegen oder wobei die erste Seitenverkleidung (26) als eine untere Seitenverkleidung und die zweite Seitenverkleidung (28) als eine obere Seitenverkleidung vorliegen.

3. Verpackungsmaschine nach Anspruch 1 oder 2, wobei der Getriebemechanismus (33) ein erstes Getriebeelement (34), insbesondere eine erste Verzahnung, an der ersten Seitenverkleidung (26) und ein zweites Getriebeelement (35), insbesondere eine zweite Verzahnung, an der zweiten Seitenverkleidung (27) umfasst, das mit dem ersten Getriebeelement (34) ineinandergreift.

4. Verpackungsmaschine nach einem der vorangehenden Ansprüche, wobei die zweite Seitenverkleidung (27), insbesondere ein oberer Abschlussbereich (31) davon, an einem unteren Endbereich (32) der ersten Seitenverkleidung (26) montiert ist und/oder wobei sich die erste Seitenverkleidung (26) in der Schutzposition und die zweite Seitenverkleidung (27) in der ausgefahrenen Position im Wesentlichen parallel zum Maschinengestell (25), insbesondere in derselben Ausrichtung, erstrecken.

5. Verpackungsmaschine nach einem der vorangehenden Ansprüche, wobei die erste Seitenverkleidung (26) in der Zugangsposition und die zweite Seitenverkleidung (27) in der eingefahrenen Position, insbesondere in derselben Richtung, vom Maschinengestell (25) weggeschwenkt sind.

6. Verpackungsmaschine nach einem der Ansprüche 1 bis 5, wobei sich die zweite Seitenverkleidung (27) in der eingefahrenen Position entlang einer Innenfläche oder Außenfläche der ersten Seitenverkleidung (26) erstreckt, insbesondere, wenn sich die erste Seitenverkleidung (26) in der Zugangsposition befindet.

7. Verpackungsmaschine nach einem der Ansprüche 1 bis 5, wobei die zweite Seitenverkleidung (27) in der eingefahrenen Position eingezogen oder schneckenförmig eingerollt ist, insbesondere, wenn sich die erste Seitenverkleidung (26) in der Zugangsposition befindet.

8. Verpackungsmaschine nach einem der vorangehenden Ansprüche, **gekennzeichnet durch** ein Fixierelement (47), insbesondere einen Hebel (49), zum Blockieren und/oder Freigeben der Verstellbarkeit der zweiten Seitenverkleidung (27) und der ersten Seitenverkleidung (26) relativ zueinander.

9. Verpackungsmaschine nach einem der vorangehenden Ansprüche, **gekennzeichnet durch** eine Halterung (38) zum Montieren der ersten Seitenverkleidung (26) am Maschinengestell (25), wobei die Halterung (38) am Maschinengestell (25), insbesondere lösbar, montiert und mit der ersten Seitenverkleidung (26) derart verbunden ist, dass die erste Seitenverkleidung (26) relativ zum Maschinengestell (25) verstellbar, insbesondere schwenkbar, ist.

10. Verpackungsmaschine nach Anspruch 9, wobei die zweite Seitenverkleidung (27) an der Halterung (38) oder der ersten Seitenverkleidung (26) montiert ist.

11. Verpackungsmaschine nach einem der vorangehenden Ansprüche, **gekennzeichnet durch** eine erste Verriegelungsvorrichtung (39) an der ersten Seitenverkleidung (26), insbesondere an einem oberen Abschlussbereich (31) davon, zum lösbaren Montieren der ersten Seitenverkleidung (26) am Maschinengestell (25).

12. Verfahren zum Verstellen einer Seitenverkleidungseinheit (50) an einer Verpackungsmaschine (1), insbesondere Tiefziehverpackungsmaschine (2), Kammerbandmaschine oder Traysealer (16), wobei die Verpackungsmaschine (1) ein Maschinengestell (25) umfasst, wobei die Seitenverkleidungseinheit (50) eine erste Seitenverkleidung (26) und eine zweite Seitenverkleidung (27) umfasst,
- wobei die erste Seitenverkleidung (26) zwischen einer Schutzposition und einer Zugangsposition verstellt wird, wobei durch das Verstellen der ersten Seitenverkleidung (26) die zweite Seitenverkleidung (27) durch einen Getriebemechanismus (33) zwischen einer ausgefahrenen Position und einer eingefahrenen Position verstellt wird.

13. Verfahren nach Anspruch 12, **gekennzeichnet durch** Montieren einer Halterung (38) der ersten Seitenverkleidung (26) am Maschinengestell (25) und/oder Lösen der Halterung (38) der ersten Seitenverkleidung (26) vom Maschinengestell (25).

14. Verfahren nach Anspruch 12 oder 13, **gekennzeichnet durch** Verriegeln einer ersten Verriegelungsvorrichtung (39) der ersten Seitenverkleidung (26) am Maschinengestell (25) und/oder Lösen der ersten Verriegelungsvorrichtung (39) der ersten Seitenverkleidung (26) vom Maschinengestell (25).

15. Verfahren nach einem der Ansprüche 12 bis 14, wobei, insbesondere nach dem Verstellen der ersten Seitenverkleidung (26) und der zweiten Seitenverkleidung (27), die erste Seitenverkleidung (26) in der Zugangsposition und die zweite Seitenverkleidung (27) in der eingefahrenen Position mittels eines Fixierelements (47) fixiert wird.
